# FASCICULE DE BREVET EUROPEEN

(11) **EP 3 918 572 B1**
(45) Date de publication et mention de la délivrance du brevet: **12.03.2025**
(21) Numéro de dépôt: 20701491.1
(22) Date de dépôt: 29.01.2020
(51) Int. Cl.: G06T 7/70, G06T 11/00

(54) **PROCÉDÉ ET DISPOSITIF D'AFFICHAGE DE DONNÉES POUR LE SUIVI D'UN ÉVÈNEMENT**
VERFAHREN UND VORRICHTUNG ZUR ANZEIGE VON DATEN ZUR ÜBERWACHUNG EINES EREIGNISSES
METHOD AND DEVICE FOR DISPLAYING DATA FOR MONITORING AN EVENT

(30) Priorité: 29.01.2019 FR 1900794
(43) Date de publication de la demande: 08.12.2021
(73) Titulaire: Immersiv, 75020 Paris (FR)
(72) Inventeur: GUERIN, Stéphane, 75020 Paris (FR); ROGER, Emmanuelle, 75020 Paris (FR)
(74) Mandataire: Ipside
(86) Numéro de dépôt international: PCT/EP2020/052137
(87) Numéro de publication internationale: WO 2020/157113

(56) Documents cités:
- US-A1- 2010 026 801
- SEONG-OH LEE ET AL: "A Vision-Based Mobile Augmented Reality System for Baseball Games", 9 July 2011, INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 61 - 68, ISBN: 978-3-642-17318-9, XP047024343
- MANON KOK ET AL: "Using Inertial Sensors for Position and Orientation Estimation", ARXIV.ORG, CORNELL UNIVERSITY LIBRARY, 201 OLIN LIBRARY CORNELL UNIVERSITY ITHACA, NY 14853, 20 April 2017 (2017-04-20), XP081324442, DOI: 10.1561/2000000094
- MELEKHOV IAROSLAV ET AL: "Relative Camera Pose Estimation Using Convolutional Neural Networks", 23 November 2017, INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 675 - 687, ISBN: 978-3-642-17318-9, XP047455591
- "International Conference on Computer Analysis of Images and Patterns. CAIP 2017: Computer Analysis of Images and Patterns", vol. 8690, 1 January 2014, SPRINGER, Berlin, Heidelberg, ISBN: 978-3-642-17318-9, article ERIC BRACHMANN ET AL: "Learning 6D Object Pose Estimation Using 3D Object Coordinates", pages: 536 - 551, XP055492302, 032548, DOI: 10.1007/978-3-319-10605-2_35

## Description

### DOMAINE TECHNIQUE DE L'INVENTION

Le domaine de l'invention est celui du traitement de données numériques.

Plus précisément, l'invention concerne un procédé et dispositif d'affichage de données pour le suivi d'un évènement.

L'invention trouve notamment des applications pour le suivi en direct d'un évènement sportif, tel qu'un match de football, de rugby, de basketball, de tennis, etc., dans une tribune d'un équipement sportif tel qu'un stade ou une salle. L'invention trouve également des applications dans le domaine du divertissement, par exemple pour le suivi d'un jeu, d'un spectacle vivant ou d'un concert.

### ÉTAT DE LA TECHNIQUE

Il est connu de l'art antérieur des techniques permettant de suivre un évènement en affichant notamment en temps réel des données, telles que des statistiques liées à un individu ou à un groupe de individus participant(s) à l'évènement, comme par exemple le nombre de buts marqués par un joueur au cours d'un match de football, le nombre d'aces ou de fautes directes d'un joueur au cours d'un match de tennis, le taux de réussite des tirs à trois points d'un joueur au cours d'un match de basketball, etc.

De telles données s'affichent généralement sur un écran de l'équipement dans lequel se déroule l'évènement.

L'inconvénient majeur de ces techniques est qu'elles sont peu intuitives pour un individu suivant l'évènement depuis une tribune de l'équipement. En outre, ces techniques ont tendance à détourner l'attention de l'individu qui doit tourner sa tête pour regarder un écran de l'équipement.

Aucun des systèmes actuels ne permet de répondre simultanément à tous les besoins requis, à savoir de proposer une technique qui permette à un individu de suivre un évènement en affichant de manière intuitive des données associées à des acteurs de l'évènement sans détourner l'attention de l'individu.

Le brevet US 2010/026801 (WILLIAMS MICHAEL JOHN [GB] ET AL) divulgue une méthode et un dispositif pour générer un journal d'événements qui ont lieu lors d'un événement sportif. En particulier, la méthode divulgue la réalisation en play-back d'incrustations d'éléments informatifs sur les joueurs dans une vidéo acquise d'un terrain de sport, à l'aide d'une caméra stationnaire.

L'article intitulé "A Vision-Based Mobile Augmented Reality System for Baseball Games", SEONG-OH LEE ET AL, (2011-07-09), INTERNATIONAL CONFERENCE ON COMPUTER ANALYSIS OF IMAGES AND PATTERNS, PAGE(S) 61 - 68, présente un système portable de réalité augmentée pour des matchs de baseball, et divulgue un procédé effectuant des incrustations d'éléments dans une image acquise d'un terrain de baseball, l'incrustation représentant des informations associées à un joueur, où les informations sont obtenues par le système via une communication sans fil avec un système externe de management d'information.

### EXPOSÉ DE L'INVENTION

La présente invention vise à remédier à tout ou partie des inconvénients de l'état de la technique cités ci-dessus.

À cet effet, l'invention vise un procédé de réalité augmentée en temps réel, comprenant des étapes de :
- acquisition d'une pluralité d'images par un dispositif d'acquisition d'images couvrant au moins en partie un espace, l'espace présentant au moins deux amers, le dispositif d'acquisition d'images étant associé à un repère bidimensionnel, dit repère de l'image, le dispositif d'acquisition d'images étant compris dans un dispositif électronique portable comprenant également un écran ;
- détection d'au moins deux amers de l'espace dans au moins une image, l'espace étant associé à un repère tridimensionnel, dit repère de l'espace ;
- détermination d'une position et d'une orientation tridimensionnelles de l'espace par rapport au dispositif d'acquisition d'images grâce aux amers détectés ;
- réception de la position instantanée, dans le repère de l'espace, d'un élément mobile se déplaçant dans l'espace ;
- calcul de la position de l'élément mobile dans le repère de l'image à partir des paramètres de transformation entre le repère de l'espace et le repère de l'image, lesdits paramètres de transformation étant calculés à partir de la position et de l'orientation tridimensionnelle de l'espace par rapport au dispositif d'acquisition d'images ;
- affichage en temps réel
   d'au moins une image acquise sur l'écran ;
- superposition en temps réel
   sur l'image affichée à l'écran d'au moins une incrustation à
une distance prédéterminée par rapport à la position de l'élément mobile dans le repère de l'image.

Ainsi, en connaissant la transformation entre le repère de l'espace et le repère de l'image, il est possible d'afficher des données associées audit élément mobile participant à un évènement vivant tel qu'un match de sport, un spectacle ou un concert, dans l'incrustation s'affichant à proximité de l'image de l'élément mobile sur l'écran retransmettant l'image acquise par le dispositif d'acquisition d'images.

L'espace peut comprendre par exemple un terrain d'un match ou un plateau d'une salle de spectacle. L'espace est généralement délimité afin de permettre à des spectateurs de suivre l'évènement vivant se déroulant dans l'espace, par exemple depuis au moins une tribune à proximité du terrain ou du plateau.

L'élément mobile est généralement un acteur participant à l'évènement vivant, tel qu'un joueur participant à un match d'un sport se déroulant sur le terrain, un acteur d'un spectacle ou un musicien d'un concert. L'élément mobile peut également être un accessoire tel qu'un accessoire de jeu disputé par des joueurs au cours d'un match. Un accessoire de jeu est généralement un ballon, une balle, un palet ou un volant.

Il convient de souligner que l'incrustation permet d'afficher une donnée, une image statique ou animée, une vidéo, ou tout autre élément permettant d'agrémenter l'image de l'évènement affichée à l'écran.

Les paramètres de transformation entre le repère de l'espace qui est tridimensionnel et le repère de l'image qui est bidimensionnel sont généralement calculés à partir de la position tridimensionnelle de l'espace par rapport au dispositif d'acquisition d'images et à partir de l'orientation tridimensionnelle de l'espace par rapport au dispositif d'acquisition d'images qui peut être une caméra.

Il convient de souligner que le dispositif d'acquisition d'images peut être représenté dans le repère de l'espace. Cette représentation comprend généralement les coordonnées tridimensionnelles du dispositif d'acquisition d'images dans le repère de l'espace et les trois angles permettant d'orienter le dispositif d'acquisition d'images dans le repère de l'espace.

La transformation entre le repère de l'espace et le repère de l'image comprend généralement au moins une translation, au moins une rotation et une projection.

Il convient de souligner que la détermination de la position et de l'orientation tridimensionnelles de l'espace par rapport au dispositif d'acquisition d'images, dans un repère associé au dispositif d'acquisition d'images ou directement dans le repère de l'espace, est effectuée en détectant des amers dans une image couvrant au moins partiellement l'espace et non en utilisant une caméra à profondeur de champ. En effet, compte-tenu de la distance généralement très importante entre le dispositif d'acquisition d'images et l'espace, une caméra à profondeur de champ ne serait pas adaptée car induisant trop d'imprécisions dans la position et l'orientation de l'espace.

Avantageusement, un amer est choisi parmi :
- une ligne d'un marquage d'un terrain ou d'un plateau compris dans l'espace ;
- un arc de cercle d'un marquage d'un terrain ou d'un plateau compris dans l'espace ;

- une intersection entre deux lignes d'un marquage d'un terrain ou d'un plateau compris dans l'espace ;
- un élément se dressant sensiblement perpendiculairement par rapport à la surface d'un terrain ou d'un plateau compris dans l'espace ;
- un élément caractéristique d'une structure entourant la surface d'un terrain ou d'un plateau compris dans l'espace ;
- un logo;
- un marqueur.

Préférentiellement, quatre amers sont détectés et utilisés pour déterminer la position et l'orientation tridimensionnelles de l'espace par rapport au dispositif d'acquisition d'images.

Dans des modes de réalisation particuliers de l'invention, le procédé de réalité augmentée comprend également une étape de reconnaissance automatique du type de terrain compris dans l'espace.

Cette étape de reconnaissance automatique du type de terrain est généralement basée sur la détection de points caractéristiques liés à la forme du terrain de sport reconnu qui peut être de tout type : football, basketball, handball, rugby, tennis, hockey, baseball, etc. Ces points caractéristiques peuvent être confondus avec les amers détectés. Il convient de souligner que cette étape de reconnaissance n'est pas spécifique à un sport en particulier mais permet de reconnaître n'importe quel terrain de sport dont les points caractéristiques types sont connus. Les points caractéristiques sont généralement la forme générale du terrain, la position relative des lignes par rapport au terrain, la présence et la position relative d'arc de cercle par rapport au terrain, etc.

Avantageusement, la reconnaissance automatique du type d'un terrain est effectuée par l'intermédiaire d'une méthode d'apprentissage profond entraînée sur une pluralité d'images de terrain.

Ainsi, il est possible de reconnaître rapidement n'importe quel type de terrain, quelque soit son orientation, son angle de vue.

En outre, grâce à cette méthode d'apprentissage profond, également appelée par le terme anglais « *Deep Learning »,* il est possible de reconnaître un terrain à partir d'une image partielle du terrain, c'est-à-dire sans avoir besoin de voir le terrain dans son ensemble.

Dans des modes de réalisation particuliers de l'invention, le procédé de réalité augmentée comprend également des étapes de :
- acquisition d'un mouvement instantané du dispositif d'acquisition d'images, en rotation et en translation par rapport à l'espace ;
- mise à jour de la position et de l'orientation du terrain de sport par rapport au dispositif d'acquisition d'images à partir de la position et de l'orientation précédentes de l'espace par rapport au dispositif d'acquisition d'images et du mouvement instantané du dispositif d'acquisition d'images.

Ainsi, les incrustations des données dans les images affichées à l'écran sont plus stables. En outre, ces étapes supplémentaires permettent d'obtenir un procédé de réalité augmentée moins consommateur en temps de calcul et donc en énergie électrique. En effet, une fois que la position et l'orientation tridimensionnelles de l'espace par rapport au dispositif d'acquisition d'images sont connues, il est aisé de les mettre à jour en connaissant les mouvements du dispositif d'acquisition d'images. Une méthode pouvant être utilisée pour évaluer ces mouvements est par exemple du type SLAM (acronyme du terme anglais « *Simultaneous Localization And Mapping* »).

Dans des modes de réalisation particuliers de l'invention, l'étape de détermination de la position et de l'orientation tridimensionnelles de l'espace par rapport au dispositif d'acquisition d'images comprend une sous-étape de génération de paramètres d'un algorithme informatique d'apprentissage automatique à partir d'une pluralité d'images enregistrées dans une base de données, chaque image de la base de données représentant tout ou partie d'un espace dont la position et l'orientation par rapport au dispositif d'acquisition d'images ayant acquis ladite image sont connues.

Ainsi, la détermination de la position et de l'orientation tridimensionnelles du terrain par rapport au dispositif d'acquisition d'images peut être effectué rapidement et de manière précise en utilisant les paramètres générés aux images acquises afin de déterminer la position et de l'orientation tridimensionnelles de l'espace.

Dans des modes de réalisation particuliers de l'invention, l'étape de détermination d'une position et d'une orientation tridimensionnelles de l'espace par rapport au dispositif d'acquisition d'images comprend une sous-étape de superposition d'un modèle tridimensionnel de l'espace sur au moins une des images acquises par le dispositif d'acquisition d'images.

Ainsi, le repère de l'espace peut être positionné et orienté dans l'espace virtuel par rapport au dispositif d'acquisition d'images.

Dans des modes de réalisation particuliers de l'invention, le procédé de réalité augmentée comprend également une étape de correction de la position instantanée de l'élément mobile en fonction d'une vitesse instantanée de l'élément mobile et/ou d'une accélération instantanée de l'élément mobile.

Ainsi, il est possible d'améliorer la position de l'incrustation dans les images, notamment lors d'une latence importante entre l'acquisition de l'image et l'affichage de celle-ci. En effet, l'utilisation de la vitesse instantanée de l'élément mobile et/ou de l'accélération instantanée de ce dernier permet de prédire une position de l'élément mobile dans un intervalle de temps proche.

La superposition de l'incrustation sur l'image affichée à l'écran d'au moins une donnée associée audit élément mobile est effectuée en temps réel.

Il convient de souligner que la ou les données incrustées dans l'image sont généralement transmise(s) par un fournisseur de données.

Avantageusement, l'incrustation comprend au moins une donnée choisie parmi :
- un nom d'un joueur ;
- une statistique associée au joueur, telle qu'un nombre de buts, un nombre d'essai, un nombre de paniers, un nombre de points marqués, un nombre de passes réussies ;
- un nom d'une équipe ;
- un positionnement d'un groupe de joueurs par rapport à d'autres joueurs ;
- une formation de l'équipe ou d'un groupe de joueur ;
- une distance entre un point du terrain et un joueur ;
- une distance entre deux points du terrain ;
   et/ou un élément graphique tel qu'une ligne, un cercle, une ellipse, une courbe, un carré ou un triangle ;
   et/ou une image fixe ou animée ;
   et/ou une vidéo.

Une animation peut par exemple être liée à la célébration d'un marquage au score pendant un match.

Dans des modes de réalisation particuliers de l'invention, le procédé de réalité augmentée comprend une étape de détermination d'un détourage d'un élément mobile, le détourage générant une occlusion pour au moins une incrustation superposée sur l'image affichée à l'écran.

Ainsi, il est possible d'avoir un rendu beaucoup plus réaliste en occultant une partie de l'incrustation affichée au niveau d'un élément mobile, et notamment au niveau d'un joueur. C'est notamment le cas lorsque l'incrustation comprend un élément graphique comme une ligne virtuelle sur le terrain, correspondant par exemple à une ligne de hors-jeu au football ou au rugby.

Dans des modes de réalisation particuliers de l'invention, le procédé de réalité augmentée comprend également une étape de sélection d'un élément mobile et d'affichage d'une information relative à l'élément mobile dans une incrustation à proximité de l'élément mobile.

L'invention vise également un dispositif électronique portable comprenant une caméra et un écran, mettant en œuvre le procédé de réalité augmentée selon l'un quelconque des modes de réalisation précédents.

Le dispositif électronique portable comprend également généralement un processeur et une mémoire informatique stockant les instructions d'un programme informatique mettant en œuvre le procédé de réalité augmentée.

Préférentiellement, le dispositif électronique portable est un téléphone portable intelligent, également connu sous le terme anglais *« smartphone »,* une lunette de réalité augmentée ou un casque de réalité augmentée.

Le dispositif électronique portable peut comprendre une monture et un écran monté sur la monture qui est destinée à être portée sur le visage d'un individu.

En d'autres termes, le dispositif électronique portable peut comprendre tout moyen de reproduction d'une image pouvant s'afficher devant un œil d'un individu, y compris une lentille de contact permettant de reproduire une image.

Dans des modes de réalisation particuliers de l'invention, le dispositif électronique portable comprend également au moins un accéléromètre et/ou un gyroscope.

Ainsi, le dispositif comprend des moyens pour évaluer les mouvements de translation et de rotation de la caméra par rapport à l'espace.

Il convient de souligner qu'une partie du procédé pourrait être mis en œuvre par un serveur distant, notamment les étapes de :
- détection d'au moins deux amers du terrain dans au moins une image, l'espace étant associé à un repère tridimensionnel, dit repère de l'espace ; et de
- détermination d'une position et d'une orientation tridimensionnelles de l'espace par rapport au dispositif d'acquisition d'images grâce aux amers détectés.

Auquel cas, l'étape de mise à jour de la position et l'orientation tridimensionnelles de l'espace en fonction en fonction de l'évaluation des mouvements de la caméra par rapport à l'espace est mise en œuvre par le dispositif électronique portable.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
[Fig 1] la figure 1 est un schéma synoptique d'un procédé de réalité augmentée selon l'invention ;
[Fig 2] la figure 2 est une vue d'un dispositif électronique portable mettant en œuvre le procédé de réalité augmentée de la figure 1.

### DESCRIPTION DÉTAILLÉE DE MODES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

### Exemple d'un mode de mise de réalisation particulier de l'invention

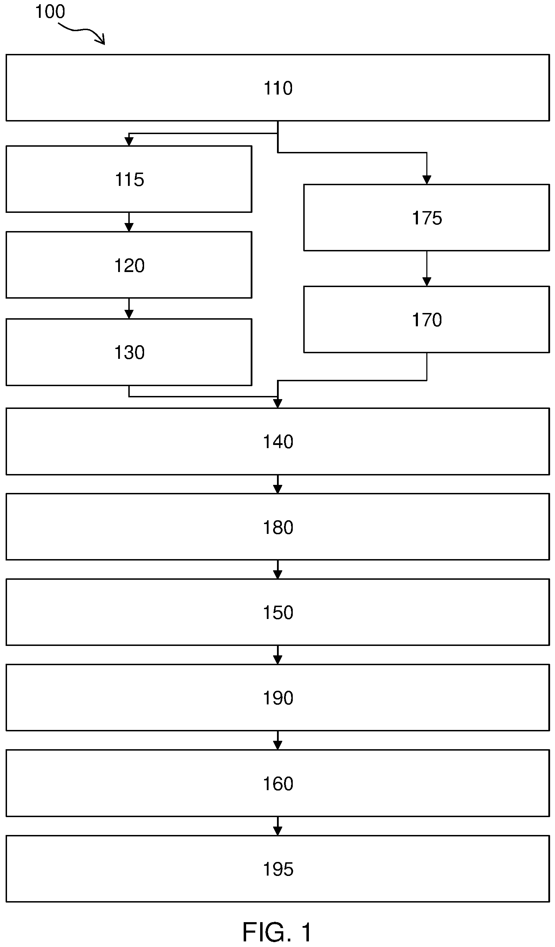

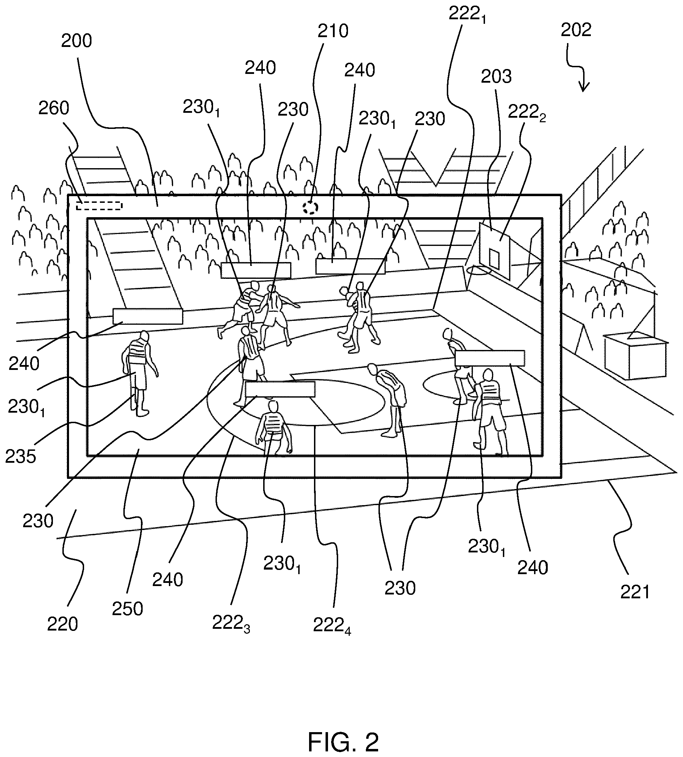

La figure 1 illustre un schéma synoptique d'un procédé 100 de réalité augmentée selon l'invention mise en œuvre par un dispositif électronique portable 200 illustré en figure 2.

Le dispositif électronique portable 200 est ici un téléphone portable intelligent tenu par un individu (non représenté) installé dans une tribune d'un espace 202 qui est une salle où se déroule un match de basketball entre deux équipes comprenant chacune cinq joueurs 230. Les deux équipes se disputent un accessoire de jeu qui est un ballon de basketball (non représenté). Le match se déroule sur un terrain 220 de basketball, comprenant un marquage 221. La salle 202 correspond dans le cas présent à un espace, l'espace comprenant le terrain 220 et des structures telles que la tribune et deux paniers 203 de basket (un seul représenté sur la figure 2).

L'individu utilise dans le présent exemple le téléphone portable 200 et voit sur un écran 250 du téléphone portable 200 l'image acquise en temps réel acquise par un dispositif 210 d'acquisition d'images qui est une caméra. La caméra 210 capte ici une partie de l'espace 202, comprenant notamment une partie du terrain 220 de basketball. Dans la situation illustrée en figure 2, les joueurs 230 des deux équipes sont situées dans une moitié de terrain, l'une des deux équipes, représentées par les rayures horizontales est en train d'attaquer tandis que l'autre équipe, représentée par les rayures verticales est en train de défendre, c'est-à-dire d'empêcher les joueurs 230₁ de l'équipe en position d'attaque d'envoyer le ballon de basketball dans le panier 203 de basketball.

Le procédé 100 comprend ainsi une première étape 110 d'acquisition d'une pluralité d'images par la caméra. Il convient de souligner que les images acquises forment généralement un flux vidéo.

Dans le champ de la caméra 210, quatre amers 222 sont détectés au cours de la deuxième étape 120 du procédé. Les quatre amers 222 sont un coin 222₁ du terrain, le panier 203 de basketball, un arc de cercle 222₃ représentant la ligne des trois points et un arc de cercle 222₄ entourant une ligne de lancers francs. Il convient de souligner que le coin 222₁, l'arc de cercle 222₃ et l'arc de cercle 222₄ font partie du marquage 221 du terrain de basketball.

De manière optionnelle, le procédé 100 peut comprendre une étape 115 préalable ou concomitante à l'étape 120 de détection des amers 222, au cours de laquelle le type de terrain est reconnu par l'intermédiaire d'un algorithme de reconnaissance de terrain basé sur un apprentissage profond (« *Deep learning* ») entraîné sur une pluralité d'images de terrain de sport. L'algorithme permet notamment de reconnaître s'il s'agit d'un terrain de basketball, un terrain de football, un terrain de rugby, un terrain de hockey, un terrain de tennis ou tout autre terrain comprenant une pluralité d'amers. Il convient de souligner que les amers détectés lors de l'étape 120 sont généralement fonction du type de terrain détecté.

Grâce aux amers 222 détectés dans l'espace 202, une position et une orientation tridimensionnelles de l'espace 202 par rapport à la caméra 210 sont déterminées au cours d'une troisième étape 130 du procédé de réalité augmentée.

La détermination de la position et de l'orientation tridimensionnelles peut être effectuée soit en superposant sur l'image un modèle de l'espace 202 grâces aux amers 222, soit en utilisant des paramètres d'un algorithme informatique d'apprentissage automatique également appelée par le terme anglais « *machine learning ».*

Le modèle de l'espace 202 comprend généralement un modèle du terrain 220 et du marquage 221, voire un modèle d'éléments singuliers pouvant faire office d'amers comme par exemple les paniers 203 de basketball. Pour superposer les amers 222 détectés dans l'image et les amers présents dans le modèle, une méthode d'homographie ou une méthode de type « *Perspective-n-Point »* peut être utilisée.

Lorsqu'un algorithme d'apprentissage automatique est utilisé, le procédé comprend généralement une étape supplémentaire de génération de paramètres de l'algorithme à partir d'images de l'espace 202 enregistrées préalablement dans une base de données, chaque image étant enregistrée avec la position et l'orientation tridimensionnelles d'un dispositif d'acquisition d'images ayant acquis ladite image. Cette étape d'apprentissage, nécessitant beaucoup temps de calcul, est généralement effectuée par un serveur distant. Il convient de souligner que cette étape d'apprentissage est généralement effectuée qu'une seule fois.

Par ailleurs, la position de l'espace 202 par rapport à la caméra 210 est généralement calculée dans un repère qui est associé soit à la caméra 210 soit à l'espace 202. Le passage du repère de la caméra au repère de l'espace est généralement effectué facilement par une translation et une rotation, ces deux repères étant tridimensionnels.

Des paramètres de transformation entre le repère de l'espace et un repère bidimensionnel associé à la caméra 210, dit repère de l'image, sont calculés pour transformer les coordonnées obtenues dans le repère de l'espace dans le repère des images obtenues par la caméra 210. Il convient de souligner que le repère de l'image est distinct du repère de la caméra dans le sens où le repère de l'image est un repère bidimensionnel et le repère de la caméra un repère tridimensionnel. Généralement, une projection permet de passer du repère de la caméra au repère de l'image.

La position instantanée, d'un élément mobile 235 dans le repère de l'espace est ensuite reçue au cours de la quatrième étape 140 du procédé 100 de réalité augmentée. L'élément mobile 235 est ici un des cinq joueurs 230 d'une des deux équipes s'affrontant au cours du match de basketball. L'élément mobile peut également être l'accessoire de jeu disputé par les deux équipes, à savoir le ballon de basketball (non représenté sur la figure 2).

Un calcul de la position de l'élément mobile 235 dans le repère de l'image est effectué au cours de la cinquième étape 150 du procédé 100 de réalité augmentée.

Dès lors où la position de l'élément mobile 235 est connue dans le repère de l'image, il est possible de superposer sur l'image affichée à l'écran 250 une incrustation 240 à proximité de la position de l'élément mobile au cours d'une sixième étape 160 du procédé 100. Généralement, la position de l'incrustation 240 est effectuée à une distance prédéterminée de la position instantanée de l'élément mobile 235 dans l'image. Dans le présent exemple non limitatif de l'invention, l'incrustation 240 est superposée verticalement par rapport à la position de l'élément mobile 235 de telle sorte qu'elle apparaisse au-dessus de l'élément mobile 235 sur l'image affichée.

Il convient de souligner qu'il est possible, comme sur la figure 2, de répéter les étapes 140 à 160 afin afficher des incrustations 240 pour une pluralité d'éléments mobiles présents dans l'espace 202, ici pour les cinq joueurs 230₁ de l'équipe qui est en phase d'attaque.

L'incrustation 240 pour chaque joueur 230₁ peut comprendre une ou plusieurs données, comme le nom du joueur et le nombre de points marqués depuis le début du match. Toute autre données statistiques utiles au suivi du match peuvent être affichées avec ce procédé 100. L'incrustation 240 peut également comprendre une animation s'affichant dès que l'élément mobile 235 a marqué au score, en envoyant le ballon dans le panier de basketball de l'équipe adverse.

Ainsi l'individu se trouvant dans une tribune peut voir le match de basketball tout en consultant les données des joueurs 230₁ sur l'écran de son téléphone 200. Il convient de souligner que l'image affichée sur l'écran 250 de son téléphone 200 peut avantageusement se superposer sur le terrain vu par l'individu, de telle sorte que l'individu peut suivre le match sans perte d'attention. En outre, l'individu n'est pas obligé de tourner la tête pour regarder un écran (non représenté dans la figure 2) présent dans la salle 202.

En outre, les données s'affichant directement à proximité des joueurs 230, le suivi est plus intuitif. En utilisant l'écran 250, généralement tactile, l'individu peut également sélectionner le type de données qu'il souhaite regarder, telle qu'une statistique particulière d'un joueur.

Il convient de souligner que l'incrustation des données au cours du procédé 100 est effectuée en temps réel par rapport à l'image acquise. En d'autres termes, le temps de calcul entre l'acquisition de l'image et l'affichage de celle-ci avec la ou les incrustation(s) 240 est effectué dans un laps de temps très court, généralement inférieur à une milliseconde, de telle sorte que l'individu puisse voir les images acquises de l'évènement quasiment simultanément avec une vision directe de l'évènement.

A cet effet, les étapes 120 et 130, gourmandes en temps de calcul, peuvent être avantageusement effectuées sur un serveur distant (non représenté sur la figure 2). Au moins une image acquise est ainsi transmise au serveur distant par l'intermédiaire de moyens de télécommunication (non représentés sur la figure 2) inclus dans le téléphone 200.

Afin de réduire la latence, la transmission des données entre le téléphone 200 et le serveur distant peut être effectuée en utilisant un réseau de télécommunication configurée selon la norme 5G. En outre, la latence peut également être réduite en utilisant un serveur informatique proche d'une antenne du réseau de télécommunication, le serveur informatique jouant alors le rôle du serveur distant effectuant les calculs des étapes 120 et 130. Dans ce cas, ce type d'architecture est connu sous le nom anglais de « *Edge Computing ».*

A partir de la position et de l'orientation tridimensionnelles du terrain par rapport à la caméra 210 calculées par le serveur distant pour une image donnée, le procédé 100 met à jour cette position et cette orientation en fonction des mouvements de la caméra 210 dans l'espace tridimensionnel au cours d'une étape 170 remplaçant les étapes 120 et 130, en utilisant par exemple une méthode SLAM (acronyme du terme anglais « *Simultaneous Localization And Mapping* »).

Ces mouvements sont par exemple acquis par un accéléromètre trois axes 260 compris dans le téléphone 200 au cours d'une étape 175 effectuée préalablement à l'étape 170.

Ainsi, le temps de calcul étant plus rapide, l'affichage des données associées aux joueurs est plus stable par rapport à la position instantanée des éléments mobiles 230.

Également dans le but d'améliorer la position de l'incrustation 240 des données, notamment afin de donner l'impression que l'élément mobile 235 est suivi par le procédé 100, le procédé 100 peut comprendre une étape optionnelle 180 comprise avant l'étape 160 afin de corriger la position instantanée de l'élément mobile 230 dans le repère de l'espace en fonction d'une vitesse instantanée et/ou d'une accélération instantanée de l'élément mobile 230. Cette vitesse instantanée et cette accélération instantanée, fournies par exemple avec les données associées aux éléments mobiles ou calculées à partir de positions instantanées successives, permettent de prédire la position de l'élément mobile 230 dans un court intervalle de temps.

Cette étape 180 permet notamment de pallier à des latences pouvant intervenir dans la transmission des données au téléphone 200.

Afin d'améliorer le réalisme de l'affichage, notamment lorsqu'au moins un élément graphique tel qu'une ligne, un cercle, un triangle est affiché, le procédé peut comprendre une étape 190 au cours de laquelle une occlusion est calculée à partir d'un détourage d'un élément mobile, tel qu'un joueur. Cette occlusion permet de supprimer une partie de l'élément graphique incrustée à l'écran ou d'empêcher l'incrustation de cette partie de l'élément graphique venant se superposer sur l'élément mobile. L'étape d'occlusion 190 peut être effectuée avant ou après l'étape d'incrustation 160.

Connaissant la position d'un élément mobile à un instant donné dans l'image, le détourage peut être effectué par l'intermédiaire d'une détection d'un contour de cet élément ou par toutes autres techniques connues de l'homme du métier. Une autre technique de détourage consiste en une estimation de pose d'un modèle représentatif d'un élément mobile, tel qu'un joueur. Ainsi, connaissant le gabarit usuel d'un joueur, une estimation de la posture globale du joueur peut être effectuée en analysant la partie visible de ce joueur sur une image ou dans une séquence d'images, en détectant notamment des points caractéristiques de la structure du joueur, généralement des points d'articulation du squelette du joueur. En estimant la posture globale du joueur, on peut alors définir une estimation du volume total occupé par le joueur ainsi que sa position dans l'espace.

A partir de la position du terrain et des éléments mobiles dans l'image, il est possible de sélectionner, au cours d'une étape optionnelle 195 un élément mobile en particulier en cliquant, ou en touchant, une zone de l'écran, dite zone d'interaction, à proximité de l'image de l'élément mobile. A partir des coordonnées de la zone d'interaction avec l'écran, il est possible d'afficher dans une incrustation les statistiques du joueur le plus proche des coordonnées de la zone d'interaction.

## Revendications

1. Procédé (100) de réalité augmentée en temps réel, comprenant des étapes de :
- acquisition (110) d'une pluralité d'images par un dispositif d'acquisition d'images (210) couvrant au moins en partie un espace (202), l'espace présentant au moins deux amers (222), le dispositif d'acquisition d'images étant associé à un repère bidimensionnel, dit repère de l'image, le dispositif d'acquisition d'images étant compris dans un dispositif électronique portable (200) comprenant également un écran (250) ;
- détection (120) d'au moins deux amers (222) de l'espace dans au moins une image, l'espace étant associé à un repère tridimensionnel, dit repère de l'espace ;
- détermination (130) d'une position et d'une orientation tridimensionnelles de l'espace par rapport au dispositif d'acquisition d'images grâce aux amers détectés ;
- réception (140) de la position instantanée, dans le repère de l'espace, d'un élément mobile (230) se déplaçant dans l'espace ;
- calcul (150) de la position de l'élément mobile (235) dans le repère de l'image à partir des paramètres de transformation entre le repère de l'espace et le repère de l'image, lesdits paramètres de transformation étant calculés à partir de la position et de l'orientation tridimensionnelle de l'espace par rapport au dispositif d'acquisition d'images ;
- affichage en temps réel d'au moins une image acquise sur l'écran (250) ;
- superposition (160) en temps réel sur l'image affichée à l'écran d'au moins une incrustation (240) à une distance prédéterminée par rapport à la position de l'élément mobile (235) dans le repère de l'image.

2. Procédé de réalité augmentée selon la revendication 1, dans lequel un amer (222) est choisi parmi :
- une ligne d'un marquage d'un terrain ou d'un plateau compris dans l'espace ;
- un arc de cercle d'un marquage d'un terrain ou d'un plateau compris dans l'espace ;
- une intersection entre deux lignes d'un marquage d'un terrain ou d'un plateau compris dans l'espace ;
- un élément se dressant sensiblement perpendiculairement par rapport à la surface d'un terrain ou d'un plateau compris dans l'espace ;
- un élément caractéristique d'une structure entourant la surface d'un terrain ou d'un plateau compris dans l'espace ;
- un logo ;
- un marqueur.

3. Procédé de réalité augmentée selon l'une quelconque des revendications 1 à 2, comprenant également une étape (115) de reconnaissance automatique du type d'un terrain compris dans l'espace.

4. Procédé de réalité augmentée selon la revendication 3, dans lequel la reconnaissance automatique du type d'un terrain est effectuée par l'intermédiaire d'une méthode d'apprentissage profond entraînée sur une pluralité d'images de terrain.

5. Procédé de réalité augmentée selon l'une quelconque des revendications 1 à 4, comprenant également des étapes de :
- acquisition (175) d'un mouvement instantané du dispositif d'acquisition d'images, en rotation et en translation par rapport à l'espace ;
- mise à jour (170) de la position et de l'orientation de l'espace par rapport au dispositif d'acquisition d'images à partir de la position et de l'orientation précédentes de l'espace par rapport au dispositif d'acquisition d'images et du mouvement instantané du dispositif d'acquisition d'images.

6. Procédé de réalité augmentée selon l'une quelconque des revendications 1 à 5, dans lequel l'étape de détermination de la position et de l'orientation tridimensionnelles de l'espace par rapport au dispositif d'acquisition d'images comprend une sous-étape de génération de paramètres d'un algorithme informatique d'apprentissage automatique à partir d'une pluralité d'images enregistrées dans une base de données, chaque image de la base de données représentant tout ou partie d'un espace dont la position et l'orientation par rapport au dispositif d'acquisition d'images ayant acquis ladite image sont connues.

7. Procédé de réalité augmentée selon l'une quelconque des revendications 1 à 6, dans lequel l'étape de détermination d'une position et d'une orientation tridimensionnelle de l'espace par rapport au dispositif d'acquisition d'images comprend une sous-étape de superposition d'un modèle de l'espace sur au moins une des images acquises par le dispositif d'acquisition d'images.

8. Procédé de réalité augmentée selon l'une quelconque des revendications 1 à 7, comprenant également une étape (180) de correction de la position instantanée de l'élément mobile en fonction d'une vitesse instantanée de l'élément mobile et/ou d'une accélération instantanée de l'élément mobile.

9. Procédé de réalité augmentée selon l'une quelconque des revendications 1 à 8, dans lequel l'incrustation (240) comprend au moins une donnée choisie parmi :
- un nom d'un joueur ;
- une statistique associée au joueur, telle qu'un nombre de buts, un nombre d'essai, un nombre de paniers, un nombre de points marqués, un nombre de passes réussies ;
- un nom d'une équipe ;
- un positionnement d'un groupe de joueurs par rapport à d'autres joueurs ;
- une formation de l'équipe ou d'un groupe de joueur ;
- une distance entre un point du terrain et un joueur ;
- une distance entre deux points du terrain ;
et/ou un élément graphique tel qu'une ligne, un cercle, un carré ou un triangle ;
et/ou une image fixe ou animée ;
et/ou une vidéo.

10. Procédé de réalité augmentée selon l'une quelconque des revendications 1 à 9, comprenant une étape de détermination d'un détourage d'un élément mobile, le détourage générant une occlusion pour au moins une incrustation superposée sur l'image affichée à l'écran.

11. Procédé de réalité augmentée selon l'une quelconque des revendications 1 à 10, comprenant également une étape de sélection d'un élément mobile et d'affichage d'une information relative à l'élément mobile dans une incrustation à proximité de l'élément mobile.

12. Dispositif électronique portable (200) comprenant une caméra (210) et un écran (250), mettant en œuvre le procédé de réalité augmentée selon l'une quelconque des revendications 1 à 11.

13. Dispositif électronique portable selon la revendication 12, **caractérisé en ce qu'**il s'agit d'un téléphone portable intelligent, d'une lunette de réalité augmentée ou d'un casque de réalité augmentée.

14. Dispositif électronique portable selon l'une quelconque des revendications 12 à 13, comprenant également au moins un accéléromètre (260) et/ou un gyroscope.

## Patentansprüche

1. Verfahren (100) für Augmented Reality in Echtzeit, umfassend die folgenden Schritte:
- Erfassen (110) einer Vielzahl von Bildern durch eine Bildaufnahmevorrichtung (210), die mindestens einen Teil eines Raums (202) abdeckt, wobei der Raum mindestens zwei Orientierungspunkte (222) aufweist, wobei die Bildaufnahmevorrichtung einem zweidimensionalen Referenzrahmen, dem sogenannten Bildreferenzrahmen, zugeordnet ist, wobei die Bildaufnahmevorrichtung in einer tragbaren elektronischen Vorrichtung (200) enthalten ist, die auch einen Bildschirm (250) umfasst;
- Erkennen (120) von mindestens zwei Orientierungspunkten (222) des Raums in mindestens einem Bild, wobei der Raum einem dreidimensionalen Referenzrahmen, dem sogenannten Raumbezugsrahmen, zugeordnet ist;
- Bestimmen (130) einer dreidimensionalen Position und räumlichen Orientierung in Bezug auf die Bildaufnahmevorrichtung anhand der erkannten Orientierungspunkte;
- Erfassen (140) der momentanen Position eines sich im Raum bewegenden mobilen Elements (230) im räumlichen Bezugsrahmen;
- Berechnen (150) der Position des beweglichen Elements (235) im Bildreferenzrahmen aus den Transformationsparametern zwischen dem Raumreferenzrahmen und dem Bildreferenzrahmen, wobei die Transformationsparameter aus der Position und der dreidimensionalen Orientierung des Raums relativ zur Bildaufnahmevorrichtung berechnet werden;
- Anzeigen mindestens eines erfassten Bildes in Echtzeit auf dem Bildschirm (250);
- Überlagern (160) mindestens einer Einblendung (240) in Echtzeit auf dem auf dem Bildschirm angezeigten Bild in einem vorbestimmten Abstand relativ zur Position des beweglichen Elements im Bildreferenzrahmen.

2. Augmented-Reality-Verfahren nach Anspruch 1, wobei ein Orientierungspunkt (222) ausgewählt ist aus:
- einer Markierungslinie eines Feldes oder einer Plattform, die in den Raum eingeschlossen ist;
- einem Kreisbogen zur Markierung des Feldes oder der Plattform im Raum;
- einem Schnittpunkt zwischen zwei Markierungslinien des Feldes oder der Plattform im Raum;
- einem Element, das im Wesentlichen senkrecht zur Oberfläche des Feldes oder der Plattform im Raum steht;
- einem charakteristischen Merkmal einer Struktur, die die Oberfläche des Feldes oder die Plattform im Raum umgibt;
- einem Logo;
- einem Marker.

3. Augmented-Reality-Verfahren nach einem der Ansprüche 1 bis 2, das auch einen Schritt (115) zur automatischen Erkennung des Feldtyps im Raum umfasst.

4. Augmented-Reality-Verfahren nach Anspruch 3, bei dem die automatische Erkennung von Feldtypen mittels eines Deep-Learning-Verfahrens durchgeführt wird, das auf einer Vielzahl von Feldbildern trainiert wurde.

5. Augmented-Reality-Verfahren nach einem der Ansprüche 1 bis 4, das auch die folgenden Schritte umfasst:
- Erfassen (175) einer momentanen Bewegung der Bildaufnahmevorrichtung in Rotation und Translation relativ zum Raum;
- Aktualisieren (170) der Position und der Ausrichtung des Raums in Bezug auf die Bildaufnahmevorrichtung ausgehend von der vorherigen Position und der Raumausrichtung in Bezug auf die Bildaufnahmevorrichtung und der momentanen Bewegung der Bildaufnahmevorrichtung.

6. Augmented-Reality-Verfahren nach einem der Ansprüche 1 bis 5, wobei der Schritt des Bestimmens der dreidimensionalen Position und Raumorientierung nach der Bildaufnahmevorrichtung einen Teilschritt des Erzeugens von Parametern eines maschinellen Lernalgorithmus aus einer Vielzahl von in einer Datenbank gespeicherten Bildern umfasst, wobei jedes Bild in der Datenbank einen Raum ganz oder teilweise darstellt, dessen Position und Orientierung relativ zur Bildaufnahmevorrichtung für das genannte Bild bestimmt und dokumentiert wird.

7. Augmented-Reality-Verfahren nach einem der Ansprüche 1 bis 6, wobei der Schritt des Bestimmens einer Position und einer dreidimensionalen Ausrichtung des Raums nach der Bildaufnahmevorrichtung einen Teilschritt des Überlagerns eines Modells auf mindestens einem der von der Bildaufnahmevorrichtung erfassten Bilder umfasst.

8. Augmented-Reality-Verfahren nach einem der Ansprüche 1 bis 7, das auch den Schritt (180) der augenblicklichen Positionskorrektur des beweglichen Elements als Funktion der augenblicklichen Geschwindigkeit des beweglichen Elements und/oder einer augenblicklichen Beschleunigung des beweglichen Elements umfasst.

9. Augmented-Reality-Verfahren nach einem der Ansprüche 1 bis 8, wobei die Einblendung (240) mindestens eine Information umfasst, ausgewählt aus:
- dem Namen eines Spielers;
- einer dem Spieler zugeordneten Statistik, wie beispielsweise Anzahl der Tore, Anzahl der Versuche, Anzahl der Körbe, Anzahl der erzielten Punkte, Anzahl der erfolgreichen Pässe;
- einem Teamnamen;
- Positionierung einer Gruppe von Spielern im Verhältnis zu anderen Spielern;
- Anordnung eines Teams oder einer Gruppe von Spielern;
- einem Abstand zwischen einem Punkt auf dem Feld und einem Spieler;
- einem Abstand zwischen zwei Punkten auf dem Feld; und/oder einem grafischen Element wie einer Linie, einem Kreis, einem Quadrat oder einem Dreieck; und/oder einem statischen oder animierten Bild; und/oder einem Video.

10. Augmented-Reality-Verfahren nach einem der Ansprüche 1 bis 9, das einen Schritt zum Bestimmen einer Konturierung eines sich bewegenden Elements umfasst, wobei der Umriss eine Okklusion für mindestens eine Einblendung erzeugt, die dem auf dem Bildschirm angezeigten Bild überlagert ist.

11. Augmented-Reality-Verfahren nach einem der Ansprüche 1 bis 10, das auch einen Schritt zur Auswahl eines sich bewegenden Elements und zur Anzeige von Informationen über das sich bewegende Element in einer Einblendung in der Nähe des sich bewegenden Elements umfasst.

12. Tragbare elektronische Vorrichtung (200), umfassend eine Kamera (210) und einen Bildschirm (250), die das Augmented-Reality-Verfahren nach einem der Ansprüche 1 bis 11 implementiert.

13. Tragbare elektronische Vorrichtung nach Anspruch 12, **dadurch gekennzeichnet, dass** sie ein intelligentes Mobiltelefon, eine Augmented-Reality-Brille oder ein Augmented-Reality-Headset ist.

14. Tragbare elektronische Vorrichtung nach einem der Ansprüche 12 bis 13, umfassend auch mindestens einen Beschleunigungsmesser (260) und/oder ein Gyroskop.

## Claims

1. Augmented reality method (100) in real time, comprising steps of:
- acquiring (110) a plurality of images by an image acquisition device (210) that at least partially cover a space (202), the space having at least two landmarks (222), the image acquisition device being associated with a two-dimensional reference frame, referred to as the reference frame of the image, the image acquisition device being comprised in a portable electronic device (200) also comprising a screen (250);
- detecting (120) at least two landmarks (222) of the space in at least one image, the space being associated with a three-dimensional reference frame, referred to as the reference frame of the space;
- determining (130) a three-dimensional position and orientation of the space in relation to the image acquisition device thanks to the landmarks detected;
- receiving (140) the instantaneous position, within the reference frame of the space, of a mobile element (230) moving in the space;
- calculating (150) the position of the mobile element (235) in the reference frame of the image from transformation parameters between the reference frame of the space and the reference space of the image, said transformation parameters being calculated from the three-dimensional position and orientation of the space in relation to the image acquisition device;
- displaying in real time at least one acquired image on the screen (250);
- superimposing (160) on the image displayed on the screen in real time at least one overlay (240) at a predetermined distance in relation to the position of the mobile element (235) in the reference frame of the image.

2. Augmented reality method according to claim 1, wherein a landmark (222) is chosen from:
- a line of a marking of a field or of a stage comprised in the space;
- a semi-circle of a marking of a field or of a stage comprised in the space;
- an intersection between two lines of a marking of a field or of a stage comprised in the space;
- an element standing substantially perpendicularly in relation to the surface of a field or of a stage comprised in the space;
- an element characteristic of a structure surrounding the surface of a field or of a stage comprised in the space;
- a logo;
- a marker.

3. Augmented reality method according to any of claims 1 to 2, also comprising a step (115) of automatic recognition of the type of a field comprised in the space.

4. Augmented reality method according to claim 3, wherein the automatic recognition of the type of a field is carried out via a method of deep learning trained on a plurality of field images.

5. Augmented reality method according to any of claims 1 to 4, also comprising steps of:
- acquiring (175) an instantaneous movement of the image acquisition device, in rotation and in translation in relation to the space;
- updating (170) the position and the orientation of the space in relation to the image acquisition device from the preceding position and orientation of the space in relation to the image acquisition device and of the instantaneous movement of the image acquisition device.

6. Augmented reality method according to any of claims 1 to 5, wherein the step of determining the three-dimensional position and orientation of the space in relation to the image acquisition device comprises a substep of generating parameters of a computer machine learning algorithm from a plurality of images recorded in a database, each image of the database representing all or a portion of a space of which the position and the orientation in relation to the image acquisition device having acquired said image are known.

7. Augmented reality method according to any of claims 1 to 6, wherein the step of determining a three-dimensional position and orientation of the space in relation to the image acquisition device comprises a substep of superimposing a model of the space on at least one of the images acquired by the image acquisition device.

8. Augmented reality method according to any of claims 1 to 7, also comprising a step (180) of correcting the instantaneous position of the mobile element according to an instantaneous speed of the mobile element and/or of an instantaneous acceleration of the mobile element.

9. Augmented reality method according to any of claims 1 to 8, wherein the overlay (240) comprises at least one piece of data chosen from:
- a name of a player;
- a statistic associated with the player, such as a number of goals, a number of tries, a number of baskets, a number of points scored, a number of successful passes;
- a name of a team;
- a positioning of a group of players in relation to other players;
- a formation of the team or of a group of players;
- a distance between a point of the field and a player;
- a difference between two points of the field ;
and/or a graphic element such as a line, a circle, a square or a triangle;
and/or a fixed or animated image;
and/or a video.

10. Augmented reality method according to any of claims 1 to 9, comprising a step of determining a clipping of a mobile element, the clipping generating an occlusion for at least one overlay superimposed on the image displayed on the screen.

11. Augmented reality method according to any of claims 1 to 10, also comprising a step of selecting a mobile element and of displaying a piece of information relating to the mobile element in an overlay in the vicinity of the mobile element.

12. Portable electronic device (200) comprising a camera (210) and a screen (250), implementing the augmented reality method according to any of claims 1 to 11.

13. Portable electronic device according to claim 12, **characterized in that** it is a smartphone, augmented reality glasses or an augmented reality headset.

14. Portable electronic device according to any of claims 12 to 13, also comprising at least one accelerometer (260) and/or a gyroscope.
